# EUROPEAN PATENT APPLICATION

(11) **EP 1 557 327 A1**
(43) Date of publication of application: **27.07.2005**
(21) Application number: 04250316.9
(22) Date of filing: 21.01.2004
(51) Int. Cl.: B60R 22/22

(54) **Buckle assembly**

(71) Applicant: Key Safety Systems, Inc., Sterling Heights, Michigan 48314 (US)
(72) Inventor: Bell, John, Carlisle Cumbria (GB)
(74) Representative: Freeman, Jacqueline Carol

(57) **Abstract**

A buckle assembly comprising a buckle head having an attachment member and a strap comprising a predetermined length of flexible woven webbing material fastened to the attachment member and comprising a loop spaced from the attachment member.

Two such buckle heads may be mounted to a mounting bracket for attachment to a vehicle and hook and loop fasteners may connect them back to back.

This buckle head is more compact and versatile then previously known arrangements.

## Description

The present invention relates to a buckle assembly, particularly to a buckle assembly for use with seat belt safety restraints for vehicles, and is particularly applicable for use in the rear passenger seat of a vehicle.

Traditionally rear seat buckles are mounted to the floor pan of a vehicle and the buckle head is stowed in a pocket in the seat cushion. The mounting must be strong enough to withstand crash forces and the buckle head is usually attached to the floor pan mounting by a steel strap or cable. However, this can cause discomfort to the rear passenger particularly in certain seating positions. In addition the steel strap makes it more difficult to fold the seat down smoothly when access to the rear storage compartment is required because the steel inhibits the buckle from folding with the seat. Steel straps also do not flex easily around the side of a child seat resulting in the buckle being pulled at an offset angle and ultimately weakening the buckle mechanism and degrading its performance.

It would be preferable to use a flexible material to attach the buckle head to the mounting but a very strong material is needed. The strong woven webbing traditionally used for the seat belt itself has been tried but it has not been satisfactory because traditional arrangements require a minimum length of at least 200mm to ensure sufficient space to attach the webbing to both the buckle head and the mounting effectively and safely, and this tends to be too long to allow the strap to fit easily into the stow pocket.

According to the present invention there is provided a buckle assembly comprising a buckle head having an attachment member and a strap comprising a predetermined length of flexible woven webbing material fastened to the attachment member at one end and comprising a loop at its other end for attachment to a vehicle.

Preferably the strap is formed of webbing which is around half the normal width of seat belt webbing, ie between about 20mm and 30mm, preferably around 25mm wide instead of the usual 48mm. This results in an overall length for the assembly of less than 140mm, and even around 130mm, which compares favourably with the previous minimum of 200mm achieved with traditional webbing.

Preferably the assembly further comprises a pin passing through the loop for attachment to a vehicle, for example by lugs to a bracket such as a sill end bracket which is fixedly mounted to the vehicle. The pin is preferably formed of steel. The loop may alternatively be fastened directly to the floor pan of a vehicle.

According to a preferred embodiment the strap thickness is about twice that of traditional seat belt webbing, ie about 1.8mm to 2.5mm preferably 2.3mm instead of 1.15mm.

The length of the stitches used to secure the webbing strap is preferably around 14mm to 20mm and even more preferably about 16mm to 18mm and most preferably about 17mm. This is in contrast to stitches in traditional seat belt webbing which have been around 37mm across the webbing (in the weft direction) and 28mm along the webbing (in the warp direction).

Two such buckle heads may be mounted to a single mounting bracket by passing the loops through holes in the bracket and inserting a pin through each loop. Complementary re-usable fastening sections, such as hook and loop fasteners, may be affixed to the sides of the buckle heads to fasten them together in an upright configuration for ease of use.

For a better understanding of the present invention and to show how the same may be carried into effect, reference will now be made to the accompanying drawings, in which:
Figure 1 shows a traditional buckle arrangement;
Figure 2 shows a buckle arrangement according to one embodiment of the present invention;
Figure 3 shows the buckle arrangement of figure 2 fastened to a bracket.
Figure 4 is a schematic diagram of two buckle arrangements fastened to a bracket.
Figure 5 shows the buckle arrangement of figure 2 fastened to a floor pan.

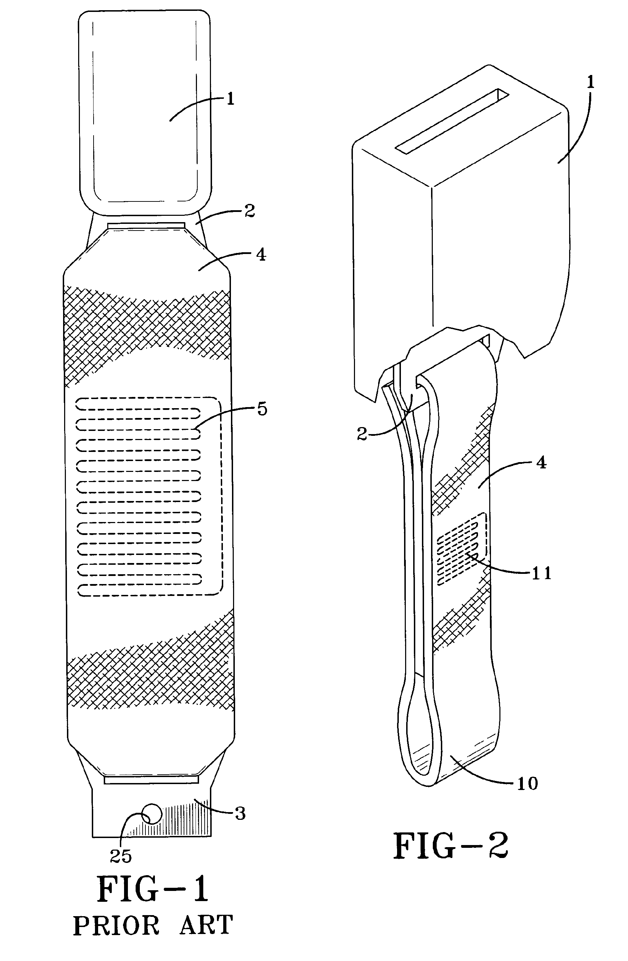

In the known arrangement of figure 1 a buckle head 1 is shown fixed to a buckle attachment bracket 2 and connected to a vehicle mounting bracket 3 by a strap comprising a length of traditional seat belt webbing 4. The webbing 4 passes through holes in each of the two brackets 2 and 3 and is stitched through three layers in a stitch pattern 5. The webbing 4 is wider than the buckle head 1 and the mounting brackets and is folded across its width in the region of the brackets so that it fits through the holes. This restricts movement of the buckle head 1 in a lateral direction and limits the space available for the stitch pattern 5. Traditionally the webbing 4 is about 48mm wide and about 1.15mm thick. The stitches in the stitch patterns would typically be about 37mm long in the direction of weft fibres, ie across the webbing, and about 28mm in the warp direction (along the webbing length) and the pattern comprises ten rows each of ten or eleven stitches across the webbing and one line of stitches in the length direction.

The mounting bracket 3 has a second hole to which a similar arrangement is attached to form a double buckle head arrangement for fixing into the middle of a rear passenger seat in a vehicle. The mounting bracket 3 also has a fixing hole 25 for attaching it to the vehicle for example with a bolt. The minimum overall length of such a known arrangement from the top of the buckle head to the mounting bracket is 200mm.

The new design can be seen in figures 2, 3, 4 and 5. The buckle head 1 is attached to a length of webbing 4 via a buckle attachment bracket 2, in the base of the buckle head 1, through which the webbing 4 passes. The webbing 4 is then folded to form a loop 10 at an end opposite to the buckle head 1 and fixed in this configuration by stitching through the three layers at 11. The webbing 4 in this embodiment is much narrower and thicker than in the arrangement of figure 1. It is typically about 25mm wide, which is less than the width of the buckle head, and about the same width as the hole in the attachment brackets 2, and about 2.3mm thick. The attachment bracket 2 in figure 2 is effectively integral with the buckle head 1.

The stitch pattern 11 comprises a grid of ten stitches and ten rows, each stitch being about 17mm long. This arrangement allows the overall length of the buckle arrangement to be particularly short: at least 140mm or 130mm.

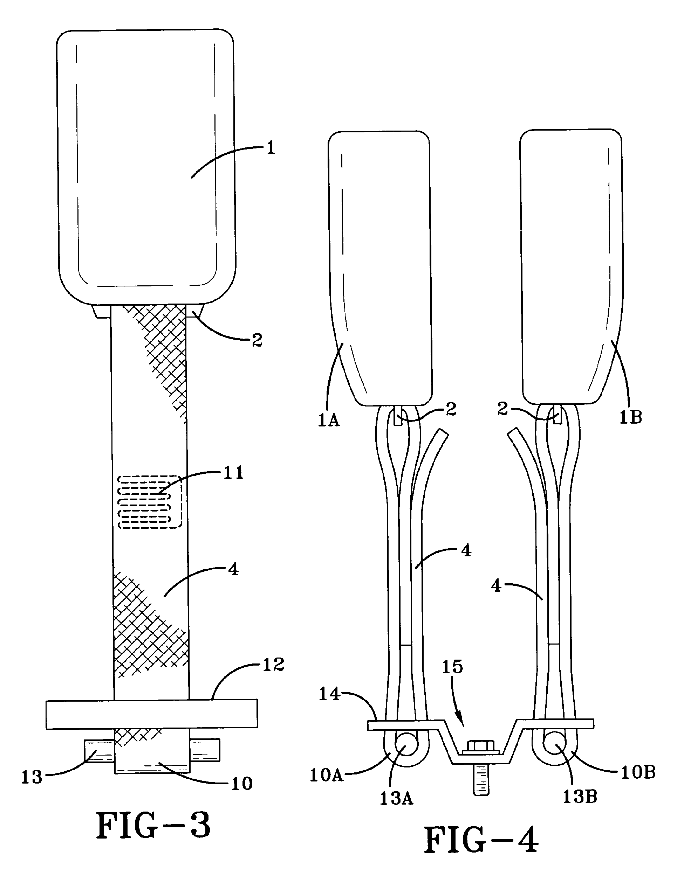

In the embodiment of figures 3 and 4 the buckle is then fastened to the vehicle by insertion of the loop 10 through a slot in a sill end bracket 12 and insertion of a steel pin 13 through the loop 10 as shown in figure 3. The sill end bracket 12 is of course secured to a load bearing part of a vehicle. The steel pin 13 is then secured in place by lugs from the sill end bracket 12 and although this is not illustrated it will be evident to a person skilled in the art how this would be done.

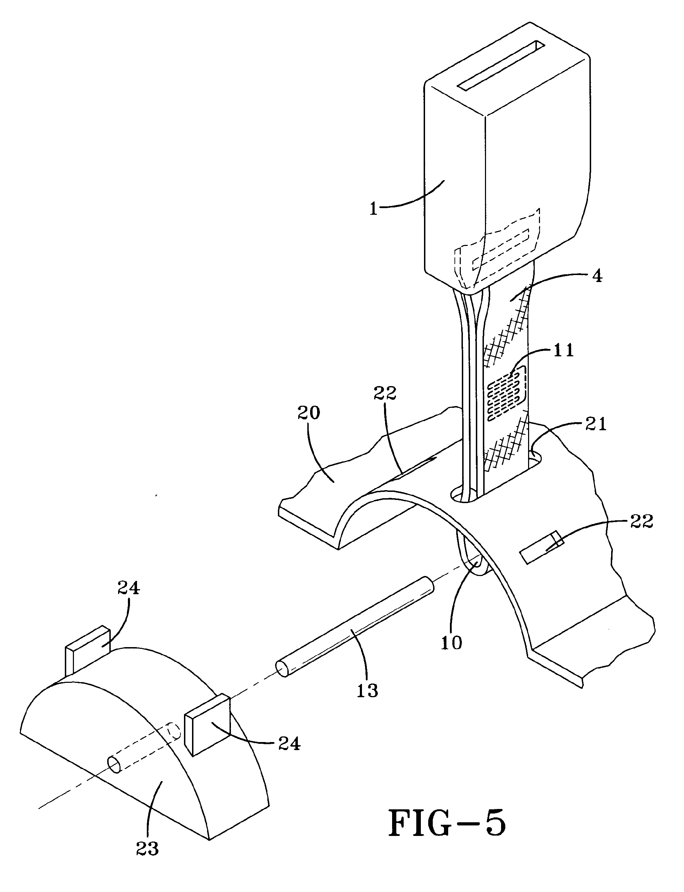

In the embodiment of figure 5 the loop 10 is directly fastened to the floor pan 20 of a vehicle by insertion through a slot 21 in the floor pan, insertion of the pin 13 in the loop 10 guided by location windows 22 and fixing the pin 13 in place by plastic fixing housing members 23 (only one of which is shown) on each side of the pin 13. The fixing housing members 23 have securing features 24 which interact with complementary features in the floor pan 20. For example upstanding lugs on the fixing housing 23 may fit into the location windows 22 on the floor pan 20 to hold the pin 13.

This new arrangement is strong but is compact, flexible and versatile allowing substantial movement of the buckle head whilst securely restraining it.

In figure 4 a schematic view is shown of a double mounting bracket 14 to which two buckle heads 1A and 1B are attached by means of this new arrangement. Webbing straps 4 are stitched in the configuration shown in figure 2 connected to respective buckle heads 1A and 1B at one end and formed with a respective loop 10A and 10B at each other end. The loops 10A and 10B are fed through slots or holes in the bracket 14 and respective steel pins 13A, 13B inserted into the loops 10A and 10B to secure the buckle heads in place.

Complementary sections of hook and loop fastening materials may be attached to sides of the buckle heads 1. This may for example be the proprietary material known by the registered trade mark VELCRO, or any other re-usable fastening material. When the buckle arrangement is fixed in place in the vehicle, these fastening materials allow the two buckle heads to be fastened together and thus to sit up vertically above seat pads so as to present the buckle head opening in a more convenient position for the passenger to insert the buckle tongue. This is encouraged by the compact nature of the arrangement and the relative rigidity of the straps in the length direction. In the previously known arrangement shown in figure 1 the arrangement did not easily sit up vertically and tended to get lost between seat pads.

The vehicle mounting brackets 12 and 14 may already be fixed in a vehicle when the buckles are attached or may be fixed subsequently, for example by means of a bolt through a hole in the bracket. In the embodiment of figure 4 such a hole may typically be provided in the region 15 between the buckle attachment slots.

## Claims

1. A buckle assembly comprising a buckle head (1) having an attachment member (2) and a strap (4) comprising a predetermined length of flexible woven webbing material fastened to the attachment member (2) and comprising a loop (10) spaced from the attachment member (2).

2. A buckle assembly according to claim 1 further comprising stitching (11) through three layers to form the loop (10) and to fasten it to the attachment member (2).

3. A buckle assembly according to claim 2 further comprising a pin (13) passing through the loop (10) for attaching the buckle head (1) to a vehicle.

4. A buckle assembly according to claim 3 wherein the pin (13) is arranged to co-operate with a mounting bracket (12) for fixing to the vehicle.

5. A buckle assembly according to claim 3 wherein the pin (13) is arranged to co-operate directly with the floor pan of a vehicle.

6. A buckle assembly according to claims 3, 4 or 5 wherein the pin (13) is formed of steel.

7. A buckle assembly according to claim 4 wherein the mounting bracket (12) is a sill end bracket.

8. A buckle assembly according to claims 2 to 7 wherein the stitching (11) comprises between 7 and 12 rows of stitches.

9. A buckle assembly according to claim 8 wherein the stitching (11) comprises between 7 and 12 stitches in each row.

10. A buckle assembly according to any one of the preceding claims wherein each stitch is between 14mm and 20mm long.

11. A buckle assembly according to any one of the preceding claims wherein the webbing is between 20mm and 30mm wide.

12. A buckle assembly according to any one of the preceding claims wherein the thickness of the webbing is between 1.8mm and 2.5mm.
